# EUROPEAN PATENT SPECIFICATION

(11) **EP 2 151 383 B1**
(45) Date of publication and mention of the grant of the patent: **27.11.2013**
(21) Application number: 09166378.1
(22) Date of filing: 24.07.2009
(51) Int. Cl.: B64D 45/00, G08G 5/06

(54) **Integrated incorrect take-off setting alerting system**
Integriertes Warnsystem zum Hinweis auf ein falsche Startkonfiguration
Système intégré d'alarme de configuration incorrecte de décollage

(30) Priority: 31.07.2008 US 184092
(43) Date of publication of application: 10.02.2010
(73) Proprietor: Honeywell International Inc., Morristown, NJ 07962 (US)
(72) Inventor: Khatwa, Ratan, Morristown, NJ 07962 (US); Conner, Kevin J., Morristown, NJ 07962 (US); Ishihara, Yasuo, Morristown, NJ 07962 (US)
(74) Representative: Buckley, Guy Julian

(56) References cited:
- FR-A1- 2 817 535
- US-A1- 2005 012 642
- US-A1- 2007 126 602

## Description

### BACKGROUND OF THE INVENTION

Safety data shows that aircraft take-off with incorrect control-surface (*e*.*g*., flaps, trim, spoilers, *etc*.) settings has contributed to previous incidents and fatal accidents. Aircraft engaged in public transport operations are typically equipped with a take-off configuration warning horn that operates once take-off power is applied. Another approach described in commonly owned U. S. Patent No. 7,274,308 provides a warning prior to takeoff that a flap configuration is incorrect, but without informing the crew members of which flap or flaps may be incorrectly position, whether a control surface other than flaps may be incorrectly positioned, or allowing the crew members to specifically select, from among several choices, a particular control surface configuration to which the aircraft should be subject during takeoff. Incident/accident data indicates that in
some cases the nature of the problem (*e*.*g*., which control surface is incorrectly configured) was not apparent to the crew when the warning sounded.

### SUMMARY OF THE INVENTION

The present invention provides a system as defined in claim 1. The system may include the features of any one or more of dependent claims 2 to 8.

In an embodiment, a system implementable in an aircraft having a plurality of control surfaces for generating a warning includes a processor, a first component configured to receive from a user a desired aircraft control-surface takeoff configuration, a second component configured to provide to the processor a first signal indicative of a current control-surface configuration of the aircraft, and a third component configured to provide to the processor a second signal indicative of the position of the aircraft. The processor may be configured to compare the aircraft position to the contents of a database, determine, based on the comparison, whether the aircraft is on a departure runway from which the aircraft is to depart, and generate an alarm if the aircraft is on the departure runway and the current control-surface configuration is different from the desired control-surface takeoff configuration.

### BRIEF DESCRIPTION OF THE DRAWINGS

Preferred and alternative embodiments of the present invention are described in detail below with reference to the following drawings.

FIG. 1 illustrates an exemplary system formed in accordance with an embodiment of the present invention; and

FIG. 2 illustrates a plan view of electronic depiction of aircraft control surfaces according to an embodiment of the invention.

### DETAILED DESCRIPTION OF THE PREFERRED EMBODIMENT

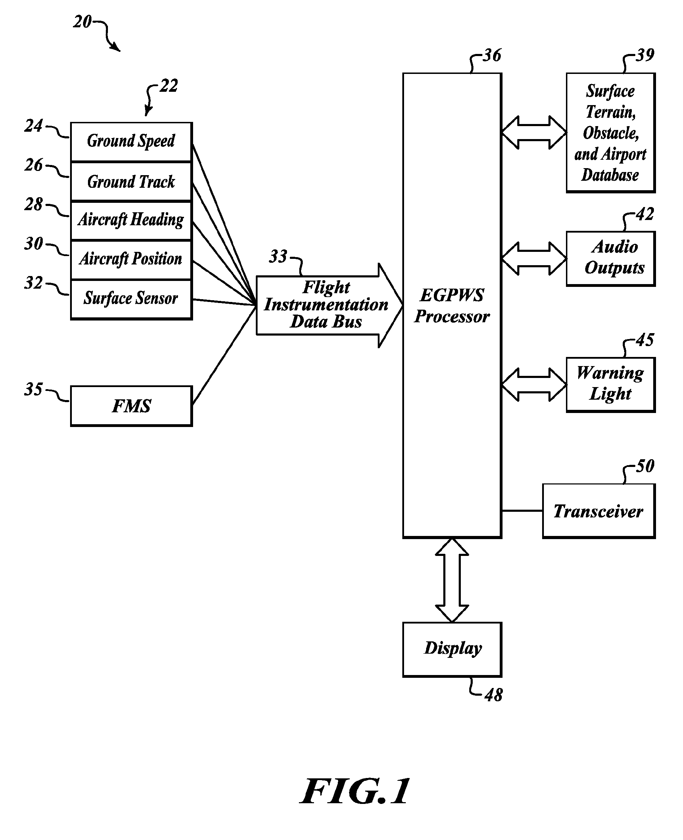

FIG. 1 indicates an enhanced ground proximity warning system ("EGPWS") processor assembly 20, which may be onboard an aircraft (not shown), including an EGPWS processor 36 in operative communication with a database 39, the database 39 being configured to contain surface terrain, obstacle, and airport information including information as to the location and orientation of airport runways. Additionally, the EGPWS processor 36 receives information from a sensor assembly 22. By way of non-limiting example, the sensor assembly 22 may include a ground speed sensor 24, a ground track sensor 26, an aircraft heading sensor 28, and an aircraft position sensor 30. Operative communication between the EGPWS processor 36 and the sensor assembly 22 may be facilitated by a flight instrumentation data bus 33. The flight information data bus 33 may be any communicative linkage between either the sensor assembly 22 as a whole or a network of communicative links between each of the distinct sensors included in the assembly 22. The EGPWS processor 36 is configured to output information through one or more of an audio output 42, a warning light 45, and a display 48 such as a heads up display, engine indicating and crew alerting system (EICAS), and or an instrument panel configured to include a cathode ray tube or other form of video graphic display.

The sensor assembly 22 further includes a control-surface sensor 32. The control-surface sensor 32 is configured to sense the configuration of multiple types of control surfaces (*e*.*g*., flaps, trim, spoilers, *etc*.) and the position of each discrete part of such control surfaces.

In at least one embodiment, the EGPWS processor 36 is in operative communication with a flight management system ("FMS"). The FMS 35 may provide to the EGPWS processor 36 information relating to the anticipated flight plan that is used for azimuth and vertical profiles of operation of a commercial aircraft. The FMS 35 may also be configured to allow an aircraft crew member to select a desired control-surface takeoff configuration from a set of possible takeoff configurations. Each such configuration may include a particular combination of control surface positions suitable for a corresponding set of takeoff conditions. Additionally, the FMS 35 may be configured to allow an aircraft crew member to select from a choice of runways a particular runway from which the aircraft will depart. Alternatively, the departure runway may be wirelessly communicated to the EGPWS processor 36 from, for example, a ground traffic control facility (not shown) via a transceiver 50.

The aircraft position sensor 30 functions to derive a position of the aircraft. Non-limiting examples of an aircraft position sensor 30 include a global positioning satellite ("GPS") receiver configured to derive an aircraft position based upon received timing signals. Other such aircraft position sensors include LORAN and other radio triangulation systems. Embodiments of the invention are not limited to devices that are autonomous within the aircraft. The aircraft position sensor 30 may also include a receiving apparatus configured to receive an aircraft position from an outside source such as a ground traffic control facility or via LAAS (Local Area Augmentation System) or WAAS (Wide Area Augmentation System).

Communicated to the EGPWS processor 36 through the flight instrumentation data bus 33, the aircraft's position is compared to the contents of the database 39 to determine if the aircraft is positioned on the runway that was specified to the FMS 35 or otherwise communicated to the EGPWS processor 36. After confirming the aircraft is positioned on the departure runway, the EGPWS processor 36 then checks the state of the aircraft control-surface configuration by communication with the control-surface sensor 32.

After receiving an indication of the current control-surface configuration from the surface sensor 32, the EGPWS processor 36 compares such current configuration with the desired control-surface configuration earlier received by the FMS 35 from a crew member. If the current configuration and desired configuration do not match, then the EGPWS processor 36 can generate a warning to flight crew that takeoff should not be attempted.

In an embodiment, the alarm may include an indication of a type of control surface causing the current control-surface configuration to differ from the desired control-surface takeoff configuration. For example, if the current flap and spoiler settings are correct as required by the desired configuration, but the trim setting is not, an aural description of the erroneously positioned trim setting (*e*.*g*., an electronically generated voice enunciating the word "trim") may be output to the flight crew via the audio outputs 42. Alternatively, or additionally, an visual description of the erroneously positioned trim setting (*e*.*g*., an electronically generated image of the word "trim") may be output to the flight crew via the display 48.

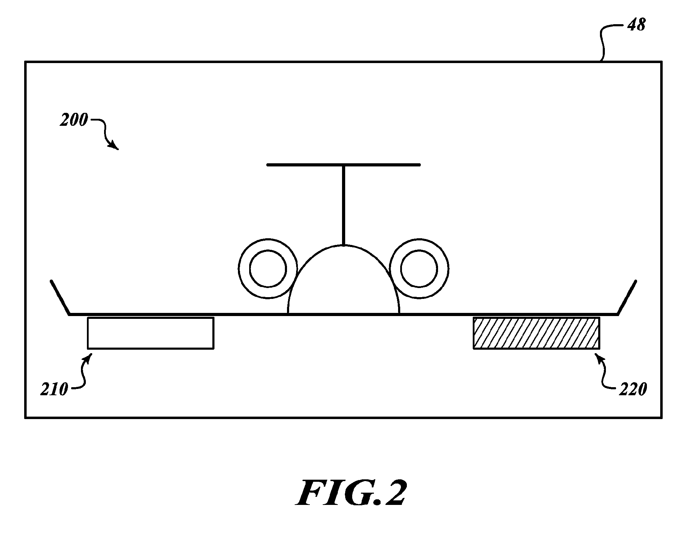

Referring to FIG. 2, in an embodiment, the EGPWS processor 36 may alternatively or additionally be configured to generate to the display 48 a detailed electronic depiction of the aircraft and its plurality of control surfaces. In the example illustrated in FIG. 2, the aircraft depiction 200 includes graphical representations of a right flap assembly 210 and a left flap assembly 220. The EGPWS processor 36 indicate the extent to which the right and left flap assemblies 210, 220 are properly positioned according to the desired control-surface configuration using contrasting presentation formats, such as, for example, color-coding or other visually distinguishing graphical techniques. If, for example, the EGPWS processor 36 determines on the departure runway that the current positioning of the right flap assembly 210 is correct according to the desired control-surface configuration, the EGPWS processor 36 can cause the right flap assembly 210 to be presented in a first format (*e*.*g*., color-coded white, as illustrated) to indicate that the right flap assembly is properly positioned. If the EGPWS processor 36 determines on the departure runway that the current control-surface configuration does not match the desired control-surface configuration because the left flap assembly 220 is improperly positioned, the EGPWS processor 36 can cause the left flap assembly 220 to be presented in a second format (*e*.*g*., color-coded black, as illustrated) to indicate that the left flap assembly is not properly positioned. Additionally, the EGPWS processor 36 may depict the improperly positioned left flap assembly 220 with a greater degree of granularity than is illustrated in FIG. 2. For example, if a particular flap section of left flap assembly 220 is improperly positioned, the display may present only such particular flap section in the distinguishing second format. It should be noted that, although only flap assemblies 210, 220 are illustrated and discussed with reference to FIG. 2, all other types of controls surfaces of which a control-surface takeoff configuration consists as discussed herein may likewise be similarly depicted on display 48 in contrasting formats, as appropriate.

While a preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A system implementable in an aircraft for generating a warning, the aircraft including a plurality of control surfaces, the system comprising:
a processor (36);
a flight management system (FMS) (35) configured to provide to the processor a flight plan, wherein the flight plan comprises an earlier received control-surface takeoff configuration;
a second component (32) configured to provide to the processor a first signal indicative of a current control-surface configuration of the aircraft: and
a third component (30) configured to provide to the processor a second signal indicative of the position of the aircraft,
wherein the processor is configured to compare the aircraft position to the contents of a database (39), determine, based on the comparison and the flight plan, whether the aircraft is on a departure runway from which the aircraft is to depart, and generate an alarm if the aircraft is on the departure runway and the current control-surface configuration is different from the flight plan.

2. The system of claim 1 wherein the desired control-surface takeoff configuration comprises trim setting.

3. The system of claim 1 wherein the first component (35) is further configured to receive from the user a selection of the departure runway.

4. The system of claim 1 wherein:
the plurality of control surfaces includes control surfaces of a plurality of types; and
the alarm comprises an indication of a type of control surface causing the current control-surface configuration to differ from the desired control-surface takeoff configuration.

5. The system of claim 4, wherein the alarm comprises an aural description of the type of control surface causing the current control-surface configuration to differ from the desired control-surface takeoff configuration.

6. The system of claim 1, further comprising a fourth component (50) configured to receive a wireless signal identifying the departure runway and provide the departure-runway identification to the processor.

7. The system of claim 1, further comprising a display device (48) configured to display representations of the plurality of control surfaces.

8. The system of claim 7 wherein the processor is configured to generate to the display device a representation in a first format of correctly configured control surfaces and a representation in a second format, different from the first format, of incorrectly configured control surfaces if the aircraft is on the departure runway and the current control-surface configuration is different from the desired control-surface takeoff configuration.

## Patentansprüche

1. System, das in einem Flugzeug anwendbar ist, um eine Warnung zu erzeugen, wobei das Flugzeug mehrere Steuerflächen enthält, wobei das System Folgendes umfasst:
einen Prozessor (36);
ein Flugleitsystem (FLS) (35), das konfiguriert ist, dem Prozessor einen Flugplan zu liefern, wobei der Flugplan eine früher empfangene Steuerflächenabhebekonfiguration umfasst;
eine zweite Komponente (32), die konfiguriert ist, dem Prozessor ein erstes Signal zu liefern, das eine aktuelle Steuerflächenkonfiguration des Flugzeugs angibt; und
eine dritte Komponente (30), die konfiguriert ist, dem Prozessor ein zweites Signal zu liefern, das die Position des Flugzeugs angibt,
wobei der Prozessor konfiguriert ist, die Flugzeugposition mit den Inhalten einer Datenbank (39) zu vergleichen, aufgrund des Vergleichs und des Flugplans zu bestimmen, ob das Flugzeug auf einer Startbahn ist, von der das Flugzeug abfliegen soll, und einen Alarm zu erzeugen, wenn das Flugzeug auf der Startbahn ist und die aktuelle Steuerflächenkonfiguration von dem Flugplan verschieden ist.

2. System nach Anspruch 1, wobei die gewünschte Steuerflächenabhebekonfiguration eine Trimmeinstellung umfasst.

3. System nach Anspruch 1, wobei die erste Komponente (35) ferner konfiguriert ist, von einem Benutzer eine Auswahl der Startbahn zu empfangen.

4. System nach Anspruch 1, wobei:
die mehreren Steuerflächen Steuerflächen von mehreren Arten enthalten; und
der Alarm eine Angabe einer Art der Steuerfläche umfasst, die bewirkt, dass die aktuelle Steuerflächenkonfiguration von der gewünschten Steuerflächenabflugkonfiguration verschieden ist.

5. System nach Anspruch 4, wobei der Alarm eine auditive Beschreibung der Art der Steuerfläche umfasst, **die bewirkt, dass die** aktuelle Steuerflächenkonfiguration von der gewünschten Steuerflächenabhebekonfiguration verschieden ist.

6. System nach Anspruch 1, das ferner eine vierte Komponente (50) umfasst, die konfiguriert ist, ein drahtloses Signal zu empfangen, das die Startbahn identifiziert, und dem Prozessor eine Startbahnidentifikation zu liefern.

7. System nach Anspruch 1, das ferner eine Anzeigevorrichtung (48) umfasst, die konfiguriert ist, Darstellungen der mehreren Steuerflächen anzuzeigen.

8. System nach Anspruch 7, wobei der Prozessor konfiguriert ist, der Anzeigevorrichtung eine Darstellung eines ersten Formats von korrekt konfigurierten Steuerflächen und eine Darstellung in einem zweiten von dem ersten Format verschiedenen Format von nicht korrekt konfigurierten Steuerflächen zu erzeugen, wenn das Flugzeug auf der Startbahn ist und die aktuelle Steuerflächenkonfiguration von der gewünschten Steuerflächenabhebekonfiguration verschieden ist.

## Revendications

1. Système susceptible d'être mis en oeuvre dans un aéronef pour générer un avertissement, l'aéronef comportant une pluralité de gouvernes, le système comprenant :
un processeur (36) ;
un système de gestion de vol (FMS) (35) conçu pour fournir au processeur un plan de vol, lequel plan de vol comprend une configuration de gouvernes pour le décollage préalablement reçue ;
un deuxième composant (32) conçu pour fournir au processeur un premier signal indiquant une configuration de gouvernes actuelle de l'aéronef ; et
un troisième composant (30) conçu pour fournir au processeur un deuxième signal indiquant la position de l'aéronef,
lequel processeur est conçu pour comparer la position de l'aéronef au contenu d'une base de données (39), déterminer, à partir de la comparaison et du plan de vol, si l'aéronef se trouve sur une piste de départ de laquelle il doit effectuer un départ, et générer une alarme si l'aéronef se trouve sur la piste de départ et la configuration de gouvernes actuelle est différente du plan de vol.

2. Système selon la revendication 1, dans lequel la configuration de gouvernes souhaitée pour le décollage comprend un réglage de compensation.

3. Système selon la revendication 1, dans lequel le premier composant (35) est en outre conçu pour recevoir une sélection de la piste de départ par l'utilisateur.

4. Système selon la revendication 1, dans lequel :
la pluralité de gouvernes comprennent des gouvernes d'une pluralité de types ; et
l'alarme comprend une indication d'un type de gouverne responsable de la différence entre la configuration de gouvernes actuelle et la configuration de gouvernes souhaitée pour le décollage.

5. Système selon la revendication 4, dans lequel l'alarme comprend une description sonore du type de gouverne responsable de la différence entre la configuration de gouvernes actuelle et la configuration de gouvernes souhaitée pour le décollage.

6. Système selon la revendication 1, comprenant en outre un quatrième composant (50) conçu pour recevoir un signal radioélectrique identifiant la piste de départ et pour fournir l'identification de la piste de départ au processeur.

7. Système selon la revendication 1, comprenant en outre un dispositif d'affichage (48) conçu pour afficher des représentations de la pluralité de gouvernes.

8. Système selon la revendication 7, dans lequel le processeur est conçu pour générer à destination du dispositif d'affichage une représentation sous un premier format de gouvernes configurées correctement et une représentation sous un deuxième format, différent du premier format, de gouvernes configurées incorrectement si l'aéronef se trouve sur la piste de départ et la configuration de gouvernes actuelle est différente de la configuration de gouvernes souhaitée pour le décollage.
